# EUROPEAN PATENT SPECIFICATION

(11) **EP 2 962 886 B1**
(45) Date of publication and mention of the grant of the patent: **10.05.2017**
(21) Application number: 15169429.6
(22) Date of filing: 27.05.2015
(51) Int. Cl.: B60K 7/00, B62M 7/12, B60K 17/04, F16H 57/02

(54) **ELECTRIC MOTOR DRIVING DEVICE AND PLANETARY GEAR UNIT**
ANTRIEBSEINHEIT MIT ELEKTRISCHEM MOTOR UND PLANETENGETRIEBEEINHEIT
DISPOSITIF D'ENTRAÎNEMENT AVEC MOTEUR ÉLECTRIQUE ET UNITÉ D'ENGRENAGE PLANÉTAIRE

(30) Priority: 11.06.2014 JP 2014120198
(43) Date of publication of application: 06.01.2016
(60) Divisional application: 16153349.2
(73) Proprietor: KANZAKI KOKYUKOKI MFG. CO., LTD., Amagasaki-shi, Hyogo 661-0981 (JP); SUZUKI MOTOR CORPORATION, Hamamatsu-shi Shizuoka 432-8611 (JP)
(72) Inventor: IWAKI, Koji, Hyogo, 661-0981 (JP); IIDA, Masaru, Hyogo, 661-0981 (JP); TSUKAMOTO, Michio, Hyogo, 661-0981 (JP); FUKUDA, Toshiyuki, Hyogo, 661-0981 (JP); ITO, Ryo, 432-8611 Shizuoka (JP); TANAKA, Junichiro, 432-8611 Shizuoka (JP)
(74) Representative: Isarpatent

(56) References cited:
- EP-A1- 1 362 736
- DE-A1- 4 134 553
- JP-A- H04 185 531
- JP-A- S62 175 217
- US-A1- 2005 145 445

## Description

### BACKGROUND OF THE INVENTION

### Field of the Invention

The present invention relates to an electric motor driving device that decelerates rotative power from an electric motor unit by a planetary gear unit and outputs the resulting rotative power.

### Related Art

An electric motor driving device that includes an electric motor unit and a planetary gear unit and that decelerates rotative power from the electric motor unit by the planetary gear unit and outputs the resulting rotative power is conventionally known and is used as, for example, a wheel motor device in a work vehicle (e.g., JP-B 4743819 = US-A-2005/145445, in accordance with the preamble of claim 1).

In the aforementioned conventional electric motor driving device, the planetary gear unit and the electric motor unit are connected such that the planetary output shaft is located coaxially with the motor output shaft of the electric motor unit to thereby reduce the size in the radial direction with reference to the motor output shaft (the planetary output shaft), but, on the other hand, there is still room for reducing the size in the axial direction of the motor output shaft (the planetary output shaft).

In particular, in the case of using the electric motor driving device as a wheel motor device in an electric motorcycle, it is necessary to reduce the size not only in the radial direction but also in the axial direction of the motor output shaft (the planetary output shaft) as much as possible while enhancing a supporting strength for the motor output shaft (the planetary output shaft).

### SUMMARY OF THE INVENTION

In view of the prior art, it is an object of the present invention to provide an electric motor driving device including an electric motor unit and a planetary gear unit, the electric motor driving device capable of being downsized in an axial direction as well as in a radial direction.

In order to achieve the object, the present invention provides an electric motor driving device including an electric motor unit that includes an electric motor body and a motor case accommodating the electric motor body, and a planetary gear unit that includes a planetary gear mechanism decelerating rotative power input from the electric motor body, a planetary output shaft outputting the rotative power decelerated by the planetary gear mechanism and a planetary case accommodating the planetary gear mechanism and connected to the motor case, wherein the planetary gear mechanism has a sun gear that inputs rotative power from the electric motor body via a power transmission shaft, a planetary gear that mesh with the sun gear, a carrier pin that supports the planetary gear in a relatively rotatable manner with respect thereto and that orbits around the sun gear together with the plane tary gear, an internal gear whose inner circumferential edge meshes with the planetary gear and that functions as a fixed element, and a carrier member that supports the carrier pin and to which the planetary output shaft is connected, the electric motor driving device. In the electric motor driving device according to the present invention, a motor-side first side wall of the motor case that is brought into contact with the planetary case is formed with an output opening into which the power transmission shaft is inserted. The carrier member includes a carrier-side first side wall that is located on a side closer to the electric motor unit than the planetary gear, that is formed with a central opening into which the power transmission shaft is inserted, and that supports supporting the carrier pin, a carrier-side second side wall that is located on a side farther from the electric motor unit than the planetary gear and that supports the carrier pin, and connecting pieces connecting the carrier-side first and second side walls while permitting the planetary gear to partially extend more radially outward than the carrier-side first and second side walls. The planetary case has a planetary-side first side wall close to the motor case with respect to the axial direction, a planetary-side second side wall located on the side opposite to the motor case with respect to the axial direction, and a planetary-side peripheral wall connecting the outer peripheral edges of the planetary-side first and second side walls. The planetary-side first side wall is formed, in the center in the radial direction, with an input opening into which the power transmission shaft is inserted, and has an inner region extending radially outward from an outer peripheral edge of the input opening, an axially extending region extending in the direction toward the carrier-side first side wall from an inner end in the radial direction of the inner region, and an outer region extending radially outward from the inner region via a transitional region. The carrier-side first side wall is rotatably supported via a bearing member inserted between an inner peripheral surface of the central opening and an outer peripheral surface of the axially extending region. The inner region protrudes in a direction toward the electric motor body in comparison with the outer region in an axial direction of the power transmission shaft so that at least a part of the inner region enters the motor case via the output opening of the motor-side first side wall when the motor case and the planetary case are connected.

The electric motor driving device according to the present invention makes it possible to be downsized in the axial direction as well as in the radial direction.

Preferably, the planetary-side second side wall may be formed with an output opening that allows the planetary output shaft to extend outward and supports the same in a rotatable manner around the axis via a bearing member.

In a preferable embodiment, a first end of the carrier pin is inserted into a bearing hole formed in one side wall (for example, the carrier-side second side wall) of the carrier-side first and second side walls, a bearing hole formed in the planetary gear, and a bearing hole formed in the other side wall (for example, the carrier-side first side wall) of the carrier-side first and second side walls in this order, and thereby the carrier pin is supported by the other side wall at the first end and supported by the one side wall at a second end on the side opposite to the first end while supporting the planetary gear at an axially intermediate part.

In this embodiment, the carrier pin is configured so that the first end includes a proximal end region extending from the intermediate part toward the distal end side and a distal end region extending from the proximal end region toward the distal end side. The distal end region has such a cross-sectional shape that is formed by partially cutting the cross-sectional shape of the proximal end region, and thereby a first stepped surface facing the distal end side of the first end is formed in the proximal end region, and a second stepped surface facing in the radial direction with reference to the axis of the carrier pin is formed in the distal end region. The other side wall is formed with first and second engagement surfaces that are engaged with the first and second stepped surfaces, respectively.

More preferably, the other side wall may have a large-diameter part and a small-diameter part that are coaxial with the power transmission shaft.

The bearing hole is formed in the large-diameter part. The small-diameter part is located more toward the distal end side in the insertion direction of the carrier pin than the large-diameter part and has such a diameter that the bearing hole is partially covered, and thereby an end surface of the small-diameter part that faces the bearing hole forms the first engagement surface, and an outer peripheral surface of the small-diameter part forms the second engagement surface.

The electric motor body may include a rotor having a permanent magnet, a plurality of stators disposed radially outside the rotor and arranged in the circumferential direction, and a plurality of motor coils respectively wound around the plurality of stators.

In one embodiment, the power transmission shaft is configured so as to include a rotor supporting region supporting the rotor in a relatively non-rotatable manners with respect thereto, a proximal end region extending from the rotor supporting region toward the side opposite to the planetary gear unit, a sun gear supporting region entering the planetary case from the rotor supporting region via the output opening and the input opening and also supporting the sun gear in a relatively non-rotatable manner with respect thereto, and a distal end region extending in the direction toward the planetary-side second side wall beyond the sun gear supporting region.

The motor case is configured to have the motor-side first side wall, a motor-side second side wall arranged on a side opposite to the motor-side first side wall with the electric motor body being sandwiched between the motor-side first and second side walls, and a motor-side peripheral wall connecting the peripheral edges of the motor-side first and second side walls. The power transmission shaft has the proximal end region supported by the motor-side second side wall via a bearing member and the distal end region supported by the carrier-side second side wall via a bearing member.

In another embodiment, the power transmission shaft is configured so as to include a motor output shaft supporting the rotor in a relatively non-rotatable manner with respect thereto and a planetary input shaft supporting the sun gear in a relatively non-rotatable manner with respect thereto.

The motor output shaft is configured to have a rotor supporting region supporting the rotor in a relatively non-rotatable manner with respect thereto, a proximal end region extending from the rotor supporting region toward the side opposite to the planetary gear unit and supported by the motor-side second side wall via a bearing member in a rotatable manner rotation around the axis, and a motor-output-side connecting region extending from the rotor supporting region in the direction toward the planetary gear unit. The planetary input shaft is configured to have a sun gear supporting region supporting the sun gear in a relatively non-rotatable manner with respect thereto, a planetary-input-shaft-side connecting region extending from the sun gear supporting region in the direction toward the electric motor unit and supported by the planetary-side first side wall via a bearing member in a rotatable manner around the axis, and a distal end region extending from the sun gear supporting region in the direction toward the planetary-side second side wall and supported by the carrier-side second side wall via a bearing member in a rotatable manner around the axis. The planetary-input-shaft-side connecting region and the motor-output-side connecting region are connected to each other in a relatively non-rotatable manner around the axis and in a removable manner.

In one embodiment, the planetary output shaft is integrally formed with the carrier-side second side wall.

In another embodiment, the planetary output shaft is separate from the carrier-side second side wall, and is connected to the carrier-side second side wall in a relatively non-rotatable manner around the axis and in a removable manner with respect thereto.

In still another embodiment, the planetary output shaft is separate from the carrier-side second side wall, the planetary output shaft is configured to include a proximal end having a circular cross-section, and the carrier-side second side wall is configured to include a connecting hole into which the proximal end of the planetary output shaft is inserted and that has a circular cross-section.

In this case, the proximal end of the planetary output shaft is fitted into the connecting hole of the carrier-side second side wall (222) in such a manner that the planetary output shaft is relatively non-rotatable around the axis with respect to the carrier member when rotational load on the planetary output shaft is equal to or less than a predetermined value and the planetary output shaft is relatively rotatable around the axis with respect to the carrier member when rotational load on the planetary output shaft exceeds the predetermined value.

The planetary gear unit may have first and second planetary covers that are mutually separate components.

The first and second planetary covers are formed with planetary-cover-side fastening holes that are arranged in the circumferential direction, while the internal gear is formed with internal-gear-side fastening holes that correspond to the planetary-cover-side fastening holes.

In this case, the first planetary cover, the second planetary cover and the internal gear are integrally connected using the planetary-cover-side fastening holes and the internal-gear-side fastening hole, with the internal gear being sandwiched between the first and second planetary covers so that the first and second planetary covers form the planetary-side first and second side walls, respectively, and the internal gear forms the planetary-side peripheral wall.

In a configuration in which the internal gear is sandwiched between the first and second planetary covers, the first planetary cover is formed at a peripheral edge region with planetary-case-side mounting holes, each of which is arranged between the adjacent planetary-cover-side fastening holes in the circumferential direction. The motor-side first side wall is formed with motor-case-side mounting holes corresponding to the planetary-case-side mounting holes. The first planetary cover is connected to the motor-side first side wall by mounting fasteners using the planetary-case-side mounting holes and the motor-case-side mounting holes.

In this case, the internal gear is configured so that the outer circumferential surface of the regions corresponding to the planetary-case-side mounting holes and the motor-case-side mounting holes with respect to the circumferential direction are depressed radially inward compared with the outer circumferential surface of the regions where the internal-gear-side fastening holes are formed.

In any one of the aforementioned various configurations, the planetary gear unit may have first and second planetary covers that are mutually separate components, one of the first and second planetary covers integrally having the internal gear.

In this case, the first and second planetary covers are integrally connected to each other using planetary-cover-side fastening holes arranged in the circumferential direction.

### BRIEF DESCRIPTION OF THE DRAWINGS

The above, and other objects, features and advantages of the present invention will become apparent from the detailed description thereof in conjunction with the accompanying drawings therein.
Fig. 1 is a front view of an electric motor driving device according to one embodiment of the present invention applied as a wheel motor device of an electric motorcycle.
Fig. 2 is a vertical cross-sectional view of the electric motor driving device.
Fig. 3 is an end view of the electric motor driving device.
Fig. 4 is a perspective view of a planetary gear unit of the electric motor driving device.
Fig. 5 is an exploded perspective view of the planetary gear unit.
Fig. 6 is an enlarged perspective view in the vicinity of carrier pins and the carrier member in the planetary gear unit.
Fig. 7 is an enlarged view of the VII part in FIG. 2.
Fig. 8 is a vertical cross-sectional view of a modification of the planetary gear unit.
Fig. 9 a vertical cross-sectional view of another modification of the planetary

### DETAILED DESCRIPTION OF THE PREFERRED EMBODIMENTS

Below, one embodiment of the electric motor driving device according to the present invention will now be described with reference to the appended drawings.

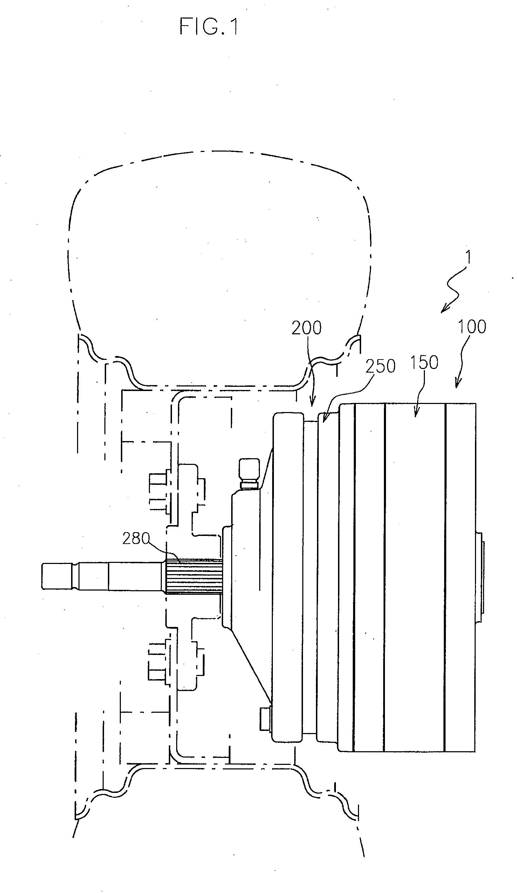

FIG. 1 shows a front view of an electric motor driving device 1 according to the present embodiment applied as a wheel motor device of an electric motorcycle.

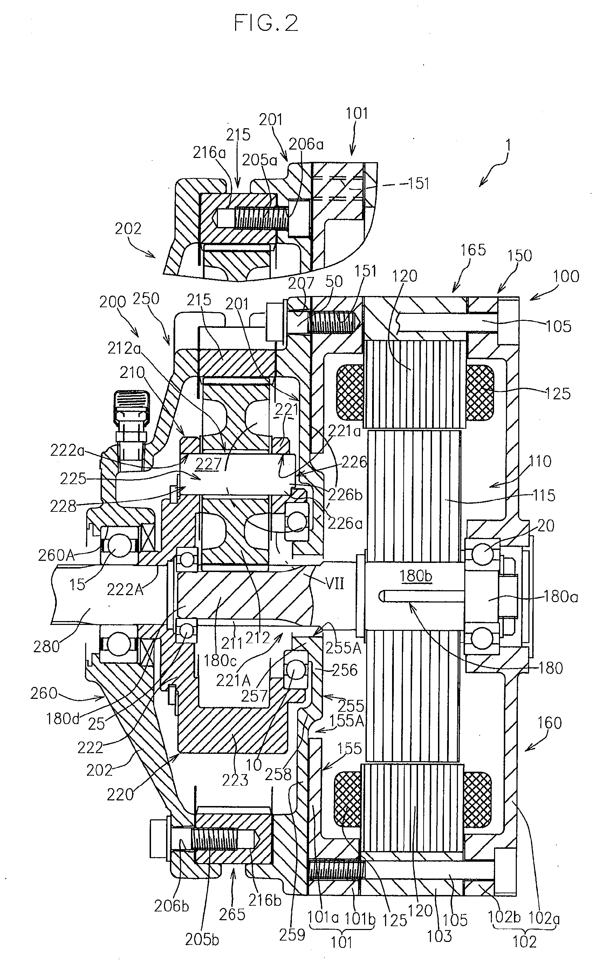

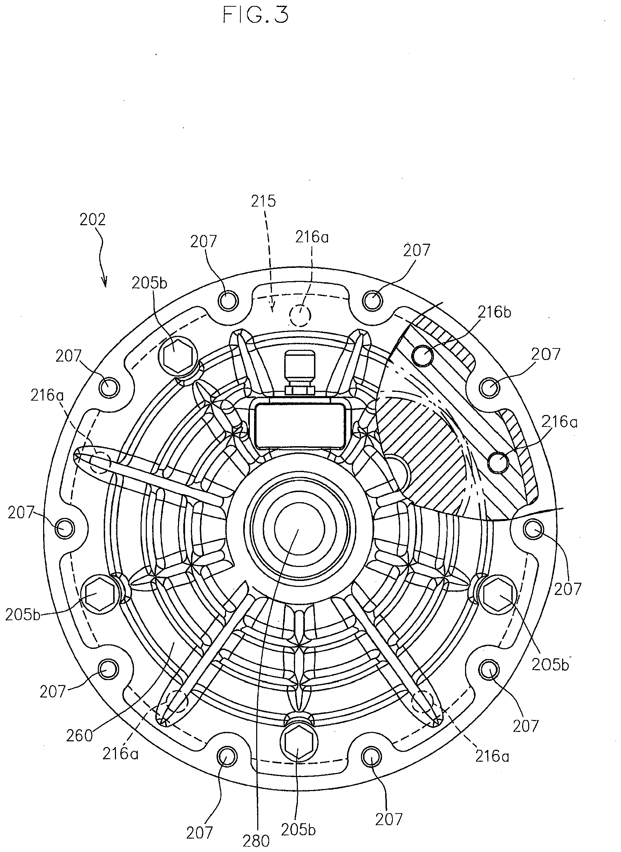

FIGS. 2 and 3 show a vertical cross-sectional front view and an end view of the electric motor driving device 1, respectively.

As shown in FIGS. 1 to 3, the electric motor driving device 1 comprises an electric motor unit 100 including an electric motor body 110 and a motor case 150 accommodating the electric motor body 110; and a planetary gear unit 200 including a planetary gear mechanism 210 that decelerates rotative power input from the electric motor body 110, a planetary output shaft 280 that outputs the rotative power decelerated by the planetary gear mechanism 210, and a planetary case 250 accommodating the planetary gear mechanism 210 and connected to the motor case 150.

As shown in FIG. 2, the electric motor body 110 has a rotor 115 having a permanent magnet, a plurality of stators 120 disposed radially outside the rotor 115 and arranged in the circumferential direction, and a plurality of motor coils 125 respectively wound around the plurality of stators 120.

As shown in FIG. 2, the motor case 150 has a motor-side first side wall 155 located on the side close to the planetary gear unit 200, a motor-side second side wall 160 facing the motor-side first side wall 155 across the electric motor body 110, and a motor-side peripheral wall 165 connecting the peripheral edges of the motor-side first and second side walls 155 and 160.

As shown in FIG. 2, an output opening 155A into which a power transmission shaft 180 for transmitting the rotative power of the electric motor body 110 to the planetary gear mechanism 210 is inserted is formed in the motor-side first side wall 155.

The structure of the power transmission shaft 180 will be described in detail below.

In the present embodiment, the electric motor unit 100 has first and second motor covers 101 and 102 that are mutually separate components.

The first motor cover 101 has a first end surface 101a forming the motor-side first side wall 155 and a first peripheral surface 101b extending from the outer peripheral edge of the first end surface 101a in the direction away from the planetary gear unit 200 along the axial direction of the power transmission shaft 180.

The second motor cover 102 has a second end surface 102a forming the motor-side second side wall 160 and a second peripheral surface 102b extending from the outer peripheral edge of the second end surface 102a in the direction toward the planetary gear unit 200 along the axial direction of the power transmission shaft 180.

In the present embodiment, the electric motor unit 100 further has a cylindrical intermediate motor cover 103.

The intermediate motor cover 103 is integrally connected to the first and second motor covers 101 and 102 by motor cover fasteners 105, with the intermediate motor cover 103 being sandwiched between the first and second motor covers 101 and 102.

In this case, the first peripheral surface 101b, the second peripheral surface 102b, and the intermediate motor cover 103 form the motor-side peripheral wall 165.

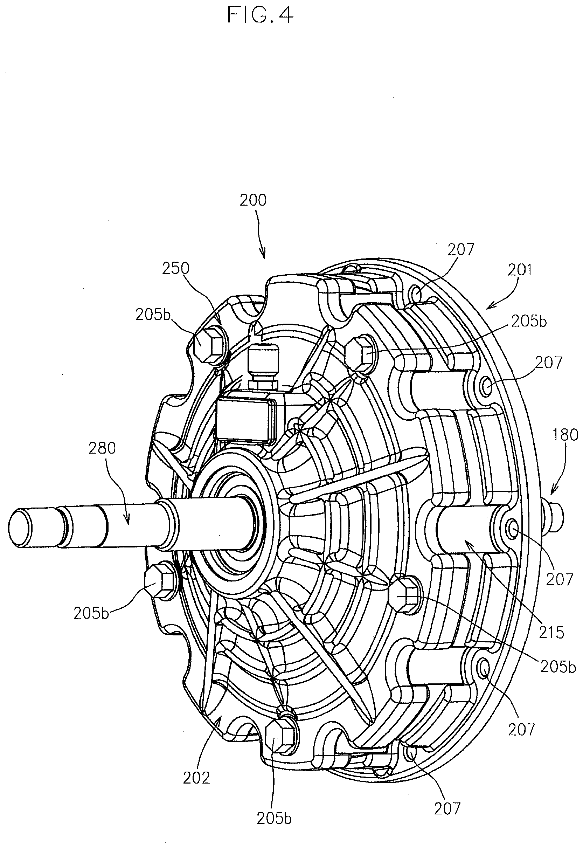

FIG. 4 shows a perspective view of the planetary gear unit 200, with the power transmission shaft 180 being attached thereto.

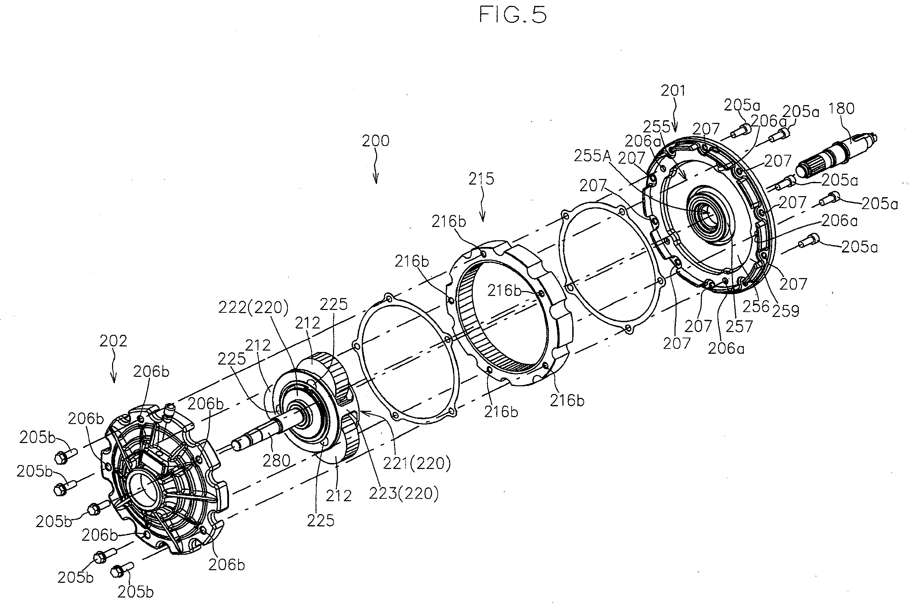

FIG. 5 shows an exploded perspective view of the planetary gear unit 200 provided with the power transmission shaft 180.

As shown in FIGS. 2 and 5, the planetary gear mechanism 210 has a sun gear 211 that inputs rotative power from the electric motor body 110 via the power transmission shaft 180; planetary gears 212 that mesh with the sun gear 211; carrier pins 225 that support the planetary gears 212 in a relatively rotatable manner with respect thereto and that orbit the sun gear 211 together with the planetary gears 212; an internal gear 215 that meshes with the planetary gears 212 and functions as a fixed element; and a carrier member 220 that supports the carrier pins 225 and to which the planetary output shaft 280 is connected.

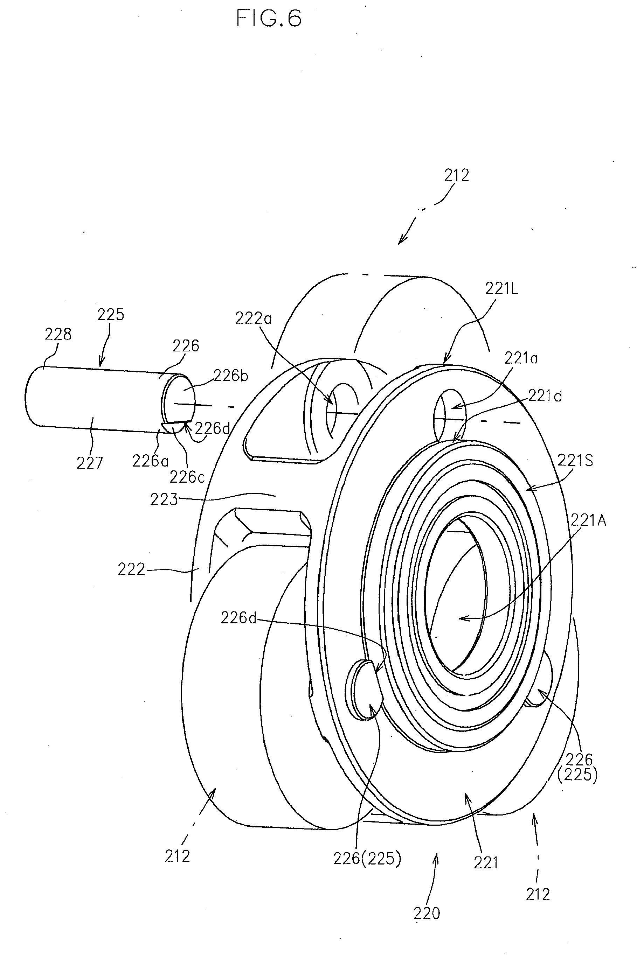

FIG. 6 shows an enlarged perspective view in the vicinity of the carrier pins 225 and the carrier member 220.

As shown in FIGS. 2, 5, and 6, the carrier member 220 has carrier-side first and second side walls 221 and 222 respectively located on the side close to the motor case 150 and on the side away from the motor case 150, with the planetary gears 212 sandwiched therebetween; and connecting pieces 223 connecting the carrier-side first and second side walls 221 and 222 while permitting the planetary gears 212 to partially extend more radially outward than the carrier-side first and second side walls 221 and 222.

A central opening 221A into which the power transmission shaft 180 is inserted and bearing holes 221a supporting the carrier pins 225 are formed in the carrier-side first side wall 221.

On the other hand, bearing holes 222a supporting the carrier pins 225 are formed in the carrier-side second side wall 222 at places facing the bearing holes 221a of the carrier-side first side wall 221.

In the present embodiment, the following configuration is provided in order to prevent the carrier pins 225 from being displaced in the insertion direction and rotating (revolving) around the axis.

As shown in FIGS. 2 and 6, a first end 226 is inserted into the bearing hole 222a formed in one of the carrier-side first and second side walls 221 and 222 (the carrier-side second side wall 222 in the present embodiment), a bearing hole 212a formed in the planetary gear 212, and the bearing hole 221a formed in the other of the carrier-side first and second side walls 221 and 222 (the carrier-side first side wall 221 in the present embodiment) in this order, and thereby the carrier pin 225, which is in a state in which an axially intermediate part 227 supports the planetary gear 212, is supported by the other side wall (the carrier-side first side wall 221 in the present embodiment) at the first end 226 and supported by the one side wall (the carrier-side second side wall 222 in the present embodiment) at the second end 228 on the side opposite to the first end 226.

Here, the first end 226 of the carrier pin 225 includes a proximal end region 226a extending from the intermediate part 227 toward the distal end side and a distal end region 226b extending from the proximal end region 226a toward the distal end side.

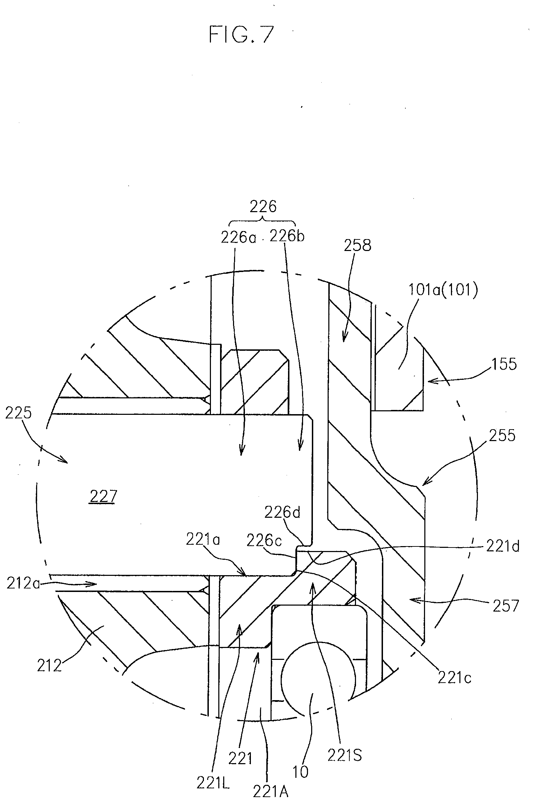

FIG. 7 shows an enlarged view of the VII part in FIG. 2.

As shown in FIGS. 2, 6, and 7, the distal end region 226b has such a cross-sectional shape that the cross-sectional shape of the proximal end region 226a is partially cut, and thereby a first stepped surface 226c facing the distal end side of the first end 226 is formed in the proximal end region 226a, and a second stepped surface 226d facing in the radial direction with reference to the axis of the carrier pin 225 is formed in the distal end region 226b.

In the present embodiment, as shown in, for example, FIG. 6, the proximal end region 226a has a circular cross-section, and the distal end region 226b has such a non-circular cross-section that the cross-sectional shape of the proximal end region 226a is partially cut.

The other side wall (the carrier-side first side wall 221 in the present embodiment) in which the bearing hole 221a for insertion of the first end 226 of the carrier pin 225 is formed is provided with first and second engagement surfaces 221c and 221d that are engaged with the first and second stepped surfaces 226c and 226d, respectively.

According to this configuration, it is possible without additional components to reliably prevent the carrier pin 225 from being displaced toward the distal end side in the insertion direction and rotating around the axis.

The carrier pin 225 is prevented from coming off in the removal direction (toward the proximal end side in the insertion direction) by a key.

In the present embodiment, the first and second engagement surfaces 221c and 221d are formed by the following structure.

That is, as shown in FIGS. 6 and 7, the other side wall (the carrier-side first side wall 221 in the present embodiment) has a large-diameter part 221L and a small-diameter part 221S that are coaxial with the power transmission shaft 180.

The bearing holes 221a are formed in the large-diameter part 221L.

The small-diameter part 221S is located more toward the distal end side in the insertion direction of the carrier pins 225 than the large-diameter part 221L and has such a diameter that the bearing holes 221a are partially covered.

In this configuration, the end surface of the small-diameter part 221S facing the bearing holes 221a forms the first engagement surface 221c, and the outer peripheral surface of the small-diameter part 221S forms the second engagement surface 221d.

This configuration makes it possible to form the first and second engagement surfaces 221c and 221d while simplifying the structure.

As shown in FIG. 2, the planetary case 250 has a planetary-side first side wall 255 close to the motor case 150 with respect to the axial direction, a planetary-side second side wall 260 located on the side opposite to the motor case 150 with respect to the axial direction, and a planetary-side peripheral wall 265 connecting the outer peripheral edges of the planetary-side first and second side walls 255 and 260.

An input opening 255A into which the power transmission shaft 180 is inserted is formed in the planetary-side first side wall 255.

That is, the power transmission shaft 180 extends from the internal space of the motor case 150 to the internal space of the planetary case 250 via the output opening 155A of the motor case 150 and the input opening 255A of the planetary case 250.

The power transmission shaft 180 further extends to the interior of the carrier member 220 via the central opening 221A of the carrier member 220.

In the present embodiment, the planetary-side first side wall 255 rotatably supports the carrier-side first side wall 221.

Specifically, as shown in FIG. 2, the planetary-side first side wall 255, which is formed with the input opening 255A into which the power transmission shaft 180 is inserted in the center in the radial direction, has an inner region 256 extending radially outward from the outer peripheral edge of the input opening 255A, an axially extending region 257 extending in the direction toward the carrier-side first side wall 221 from the inner end in the radial direction of the inner region 256, and an outer region 259 extending radially outward from the inner region 256 via a transitional region 258 and disposed farther from the electric motor unit 100 than the inner region 256 is.

In this configuration, as shown in FIG. 2, the carrier-side first side wall 221 is rotatably supported by the planetary-side first side wall 255 via a bearing member 10 provided on the outer peripheral surface of the axially extending region 257.

As shown in FIG. 2, the outer region 259 is at least partially in contact with the motor-side first side wall 155 when the motor case 150 and the planetary case 250 are connected.

On the other hand, the inner region 256, which is closer to the electric motor unit 100 than the outer region 259 is, that is, which protrudes in a direction toward the electric motor body in comparison with the outer region in an axial direction of the power transmission shaft, at least partially enters the motor case 150 via the output opening 155A of the motor-side first side wall 155 when the motor case 150 and the planetary case 250 are connected.

Thus, in the present embodiment, the carrier-side first side wall 221 of the carrier member 220 located on the side close to the electric motor unit 100 is rotatably supported by the planetary-side first side wall 255 of the planetary case 250, also the planetary-side first side wall 255 is caused to partially enter the motor case 150 via the output opening 155A, and thereby the overall length of the electric motor driving device 1 in the axial direction is shortened.

Moreover, in the present embodiment, as shown in FIGS. 2 and 5, by forming the internal gear 215 into a ring whose inner peripheral edge is provided with teeth that mesh with the planetary gears 212 and by positioning the sun gear 211, the planetary gears 212, and the internal gear 215 in axially the same location, the size of the planetary gear mechanism 210 with respect to the axial direction is also reduced.

In the present embodiment, the internal gear 215 forms the planetary-side peripheral wall 265 of the planetary case 250.

Specifically, as shown in FIGS. 2 and 5, the planetary gear unit 200 has first and second planetary covers 201 and 202 that are mutually separate components and form the planetary-side first and second side walls 255 and 260, respectively.

The first and second planetary covers 201 and 202 are integrally connected, with the internal gear 215 being sandwiched therebetween.

Specifically, as shown in FIGS. 2 and 5, a plurality of internal-gear-side fastening holes 216 disposed in the circumferential direction are formed in the internal gear 215.

On the other hand, planetary-cover-side fastening holes 206 corresponding to the internal-gear-side fastening holes 216 are formed in the first and second planetary covers 201 and 202.

In this configuration, the first planetary cover 201, the second planetary cover 202, and the internal gear 215 are integrally connected by fasteners 205 using the planetary-cover-side fastening holes 206 and the internal-gear-side fastening hole 216, with the internal gear 215 being sandwiched between the first and second planetary covers 201 and 202 so as to form the planetary-side peripheral wall 265 of the planetary case 250.

In the present embodiment, as shown in FIGS. 2 and 5, the plurality of internal-gear-side fastening holes 216 include internal-gear-side first threaded holes 216a opening toward the first planetary cover 201 and internal-gear-side second threaded holes 216b opening toward the second planetary cover 202.

On the other hand, the planetary-cover-side fastening holes 206 include first-planetary-cover-side fastening holes 206a formed in the first planetary cover 201 so as to correspond to the internal-gear-side first threaded holes 216a and second-planetary-cover-side fastening holes 206b formed in the second planetary cover 202 so as to correspond to the internal-gear-side second threaded holes 216b.

That is, the first planetary cover 201 and the internal gear 215 are connected by fasteners 205a, the second planetary cover 202 and the internal gear 215 are connected by fasteners 205b, and thereby the first planetary cover 201, the second planetary cover 202, and the internal gear 215 are integrally connected.

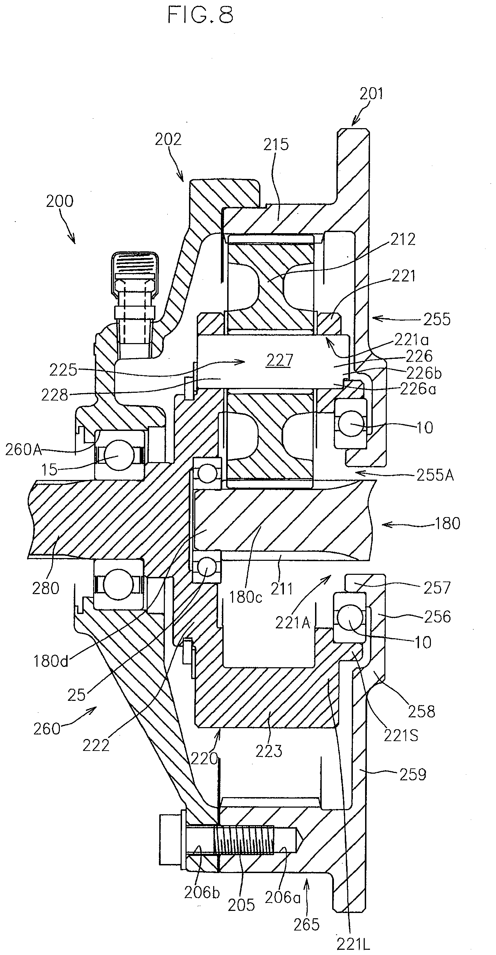

In place of this configuration, as shown in FIG. 8, it is also possible to form the internal gear 215 integrally with one of the first and second planetary covers 201 and 202.

In this case, the first and second planetary covers 201 and 202 are integrally connected by the fasteners 205 using the planetary-cover-side fastening holes 206a and 206b.

In the modification shown in FIG. 8, the internal gear 215 is integrally formed with the first planetary cover 201.

Next, a connecting structure for the planetary case 250 and the motor case 150 is described.

In the present embodiment, the planetary case 250 and the motor case 150 are removably connected by mounting fasteners 50 (see FIG. 2).

Specifically, as shown in FIGS. 2 and 5, planetary-case-side mounting holes 207 are formed in the first planetary cover 201, and motor-case-side mounting holes 151 corresponding to the planetary-case-side mounting holes 207 are formed in the motor case 150.

The planetary case 250 in which the first planetary cover 201, the second planetary cover 202, and the internal gear 215 are integrally connected is connected to the motor case 150 by the mounting fasteners 50 using the planetary-case-side mounting holes 207 and the motor-case-side mounting holes 151.

In such a configuration, it is necessary to configure the mounting fasteners 50 not to interfere with the internal gear 215.

Generally, positioning the planetary-case-side mounting holes 207 more radially outside than the outer peripheral edge of the internal gear 215 can prevent the mounting fasteners 50 from interfering with the internal gear 215.

However, this configuration requires the sizes of the first planetary cover 201 and the motor case 150 to be large in the radial direction.

That is, in order to provide the planetary-case-side mounting holes 207 more radially outside than the outer peripheral edge of the internal gear 215, it is necessary to provide the first planetary cover 201 with a flange at a place more radially outside the outer peripheral edge of the internal gear 215 and form the planetary-case-side mounting holes 207 in the flange, thus resulting in increased sizes of the first planetary cover 201 and the corresponding motor case 150 in the radial direction.

The inner diameter of the internal gear 215 (the diameter of the inner peripheral surface where teeth that mesh with the planetary gears 212 are disposed) is determined depending on the gear ratio of the planetary gear mechanism 210, and the outer diameter of the internal gear 215 is determined depending on the required strength of the internal gear 215.

That is, theoretically, reducing the size of the internal gear 215 in the radial direction can prevent a radially outward increase of the first planetary cover 201 and the motor case 150. But, as described above, since the inner diameter and the outer diameter of the internal gear 215 are determined depending on the gear ratio of the planetary gear mechanism 210 and the required strength of the internal gear 215, there is a limit to reducing the diameter of the internal gear 215.

In consideration of such a point, in the present embodiment, as shown in FIG. 5, the planetary-case-side mounting holes 207 are provided between the planetary-cover-side fastening holes 206 that are adjacent with respect to the circumferential direction, and the outer circumferential surface of the regions of the internal gear 215 corresponding to the planetary-case-side mounting holes 207 with respect to the circumferential direction are depressed radially inward compared with the outer circumferential surface of the regions where the internal-gear-side fastening holes 216 are formed.

According to this configuration, while determining the inner diameter and the outer diameter of the internal gear 215 depending on the gear ratio of the planetary gear mechanism 210 and the required strength of the internal gear 215, the planetary-case-side mounting holes 207 are placed as radially inward as possible, and it is thus possible to make the sizes of the first planetary cover 201 and the motor case 150 as small as possible with respect to the radial direction.

The planetary output shaft 280 is connected to the carrier member 220 in a relatively non-rotatable manner around the axis with respect thereto, with the planetary output shaft 280 being disposed on the same axis as the power transmission shaft 180.

Next, the planetary output shaft 280 is described.

In the present embodiment, as shown in FIG. 2, the planetary output shaft 280 extends outward from the planetary case 250 via an output opening 260A formed in the planetary-side second side wall 260, and is supported by a bearing member 15 disposed in the output opening 260A in a rotatable manner around the axis.

Specifically, in the present embodiment, an assembly in which the carrier member 220 and the planetary output shaft 280 are connected to each other in a relatively non-rotatable manner around the axis, is supported at both ends by the bearing member 10 inserted between the carrier-side first side wall 221 and the planetary-side first side wall 255 and the bearing member 15 inserted between the planetary-side second side wall 260 and the planetary output shaft 280.

In the present embodiment, as shown in FIG. 2, the planetary output shaft 280 is a component separate from the carrier member 220 and is connected to the carrier-side second side wall 222 in a relatively non-rotatable manner around the axis and in a detachable manner with respect thereto.

That is, a connecting hole 222A (see FIG. 2) having a non-circular cross-section is formed in the carrier-side second side wall 222, and the planetary output shaft 280 is connected to the connecting hole 222A in a relatively rotatable manner around the axis and in a removable manner with respect thereto.

Instead of this configuration, it is also possible to integrally form the carrier-side second side wall 222 and the planetary output shaft 280 as in the modification shown in FIG. 8.

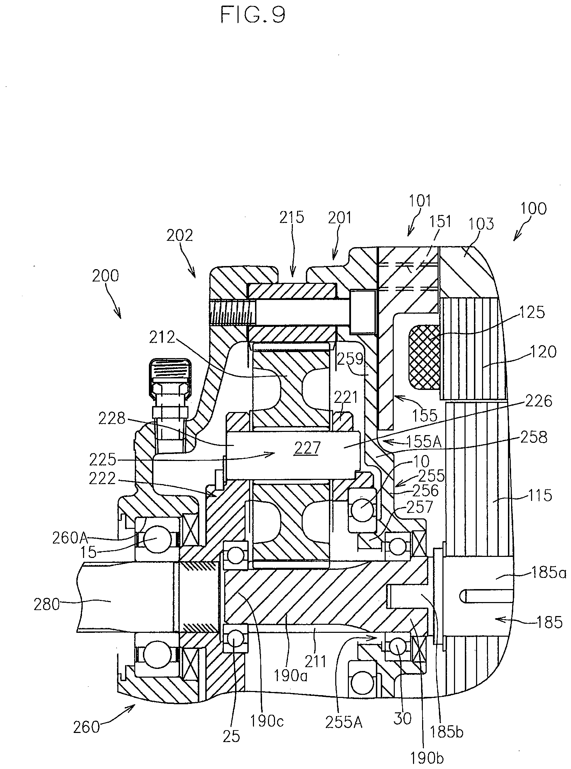

Alternatively, as in another modification shown in FIG. 9, on the premise that the planetary output shaft 280 is a component separate from the carrier-side second side wall 222 and that the proximal end of the planetary output shaft 280 and the connecting hole 222A of the carrier-side second side wall 222 have circular cross-sections, it is also possible to fit the proximal end of the planetary output shaft 280 to the connecting hole 222A of the carrier-side second side wall 222 in such a manner that the planetary output shaft 280 is relatively non-rotatable around the axis with respect to the carrier member 220 when rotational load on the planetary output shaft 280 is equal to or less than a predetermined value and the planetary output shaft 280 is relatively rotatable around the axis with respect to the carrier member 220 when rotational load on the planetary output shaft 280 exceeds the predetermined value.

According to this configuration, for example, when excessive load is applied to the drive wheel that is operably driven by the planetary output shaft 280, it is possible to effectively prevent the electric motor driving device 1 from being damaged by the load.

Now, the structure of the power transmission shaft 180 is described in detail.

As shown in FIG. 2, the power transmission shaft 180 is a single shaft in the present embodiment.

Specifically, the power transmission shaft 180 includes a rotor supporting region 180b supporting the rotor 115 in a relatively non-rotatable manners with respect thereto, a proximal end region 180a extending from the rotor supporting region 180b toward the side opposite to the planetary gear unit 200, a sun gear supporting region 180c entering the planetary case 250 from the rotor supporting region 180b via the output opening 155A and the input opening 255A and supporting the sun gear 211 in a relatively non-rotatable manner with respect thereto, and a distal end region 180d extending in the direction toward the planetary-side second side wall 260 beyond the sun gear supporting region 180c.

As shown in FIG. 2, the power transmission shaft 180 is supported at both the proximal end region 180a and the distal end region 180d.

That is, the power transmission shaft 180 has the proximal end region 180a supported by the motor-side second side wall 160 via a bearing member 20 and the distal end region 180d supported by the carrier-side second side wall 222 via a bearing member 25.

Instead of this configuration, as in the modification shown in FIG. 9, it is possible to configure the power transmission shaft 180 to include a motor output shaft 185 supporting the rotor 115 in a relatively non-rotatable manner with respect thereto and a planetary input shaft 190 supporting the sun gear 211 in a relatively non-rotatable manner with respect thereto.

Specifically, as shown in FIG. 9, the motor output shaft 185 has a rotor supporting region 185a supporting the rotor 115 in a relatively non-rotatable manner with respect thereto, a proximal end region (not shown in FIG. 9) extending from the rotor supporting region 185a toward the side opposite to the planetary gear unit 200 and supported by the motor-side second side wall 160 via the bearing member 20 (not shown in FIG. 9, see FIG. 2) in a rotatable manner rotation around the axis, and a motor-output-side connecting region 185b extending from the rotor supporting region 185a in the direction toward the planetary gear unit 200.

On the other hand, as shown in FIG. 9, the planetary input shaft 190 has a sun gear supporting region 190a supporting the sun gear 211 in a relatively non-rotatable manner with respect thereto, a planetary-input-shaft-side connecting region 190b extending from the sun gear supporting region 190a in the direction toward the electric motor unit 100 and supported by the planetary-side first side wall 255 via the bearing member 30 in a rotatable manner around the axis, and a distal end region 190c extending from the sun gear supporting region 190a in the direction toward the planetary-side second side wall 260 and supported by the carrier-side second side wall 222 via the bearing member 25 in a rotatable manner around the axis.

The planetary-input-shaft-side connecting region 190b and the motor-output-side connecting region 185b are connected to each other in a relatively non-rotatable manner around the axis and in a removable manner.

In the modification shown in FIG. 9, the end surface of the planetary-input-shaft-side connecting region 190b and the end surface of the motor-output-side connecting region 185b are concavo/convex-engaged to each other in a relatively non-rotatable manner around the axis and in an axially separable manner, and are configured to be connected and separated according to the connection and separation of the planetary case 250 and the motor case 150.

## Claims

1. An electric motor driving device (1) comprising an electric motor unit (100) that includes an electric motor body (110) and a motor case (150) accommodating the electric motor body (110), and a planetary gear unit (200) that includes a planetary gear mechanism (210) decelerating rotative power input from the electric motor body, a planetary output shaft (280) outputting the rotative power decelerated by the planetary gear mechanism (210) and a planetary case (250) accommodating the planetary gear mechanism (210) and connected to the motor case (150), wherein the planetary gear mechanism (210) has a sun gear (211) that inputs rotative power from the electric motor body (110) via a power transmission shaft (180), a planetary gear (212) that meshes with the sun gear (211), a carrier pin (225) that supports the planetary gear (212) in a relatively rotatable manner with respect thereto and that orbits around the sun gear (211) together with the planetary gear (212), an internal gear (215) whose inner circumferential edge meshes with the planetary gear (212) and that functions as a fixed element, and a carrier member (220) that supports the carrier pin (225) and to which the planetary output shaft (280) is connected, the electric motor driving device (1) being **characterized in that**,
a motor-side first side wall (155) of the motor case (150) that is brought into contact with the planetary case (250) is formed with an output opening (155A) into which the power transmission shaft (180) is inserted,
the carrier member (220) includes a carrier-side first side wall (221) that is located on a side closer to the electric motor unit (100) than the planetary gear (212), that is formed with a central opening (221A) into which the power transmission shaft (180) is inserted, and that supports the carrier pin (225), a carrier-side second side wall (222) that is located on a side farther from the electric motor unit (100) than the planetary gear (212) and that supports the carrier pin (225), and connecting pieces (223) connecting the carrier-side first and second side walls (221, 222) while permitting the planetary gear (212) to partially extend more radially outward than the carrier-side first and second side walls (221, 222),
the planetary case (250) has a planetary-side first side wall (255) close to the motor case (150) with respect to the axial direction, a planetary-side second side wall (260) located on the side opposite to the motor case (150) with respect to the axial direction, and a planetary-side peripheral wall (265) connecting the outer peripheral edges of the planetary-side first and second side walls (255, 260),
the planetary-side first side wall (255) is formed, in the center in the radial direction, with an input opening (255A) into which the power transmission shaft (180) is inserted, and has an inner region (256) extending radially outward from an outer peripheral edge of the input opening (255A), an axially extending region (257) extending in the direction toward the carrier-side first side wall (221) from an inner end in the radial direction of the inner region (256), and an outer region (259) extending radially outward from the inner region (256) via a transitional region (258),
the carrier-side first side wall (221) is rotatably supported via a bearing member (10) inserted between an inner peripheral surface of the central opening (221A) and an outer peripheral surface of the axially extending region (257), and
the inner region (256) protrudes in a direction toward the electric motor body (110) in comparison with the outer region (259) in an axial direction of the power transmission shaft (180) so that at least a part of the inner region (256) enters the motor case (150) via the output opening (155A) of the motor-side first side wall (155) when the motor case (150) and the planetary case (250) are connected.

2. An electric motor driving device (1) according to claim 1 wherein the planetary-side second side wall (260) is formed with an output opening (260A) that allows the planetary output shaft (280) to extend outward and supports the same in a rotatable manner around the axis via a bearing member (15).

3. An electric motor driving device (1) according to claim 1 or 2,
wherein a first end (226) of the carrier pin (225) is inserted into a bearing hole (222a) formed in one of the carrier-side first and second side walls (221, 222), a bearing hole (212a) formed in the planetary gear (212), and a bearing hole (221a) formed in the other of the carrier-side first and second side walls (221, 222) in this order, and thereby the carrier pin (225) is supported by the other side wall (221) at the first end (226) and supported by the one side wall (222) at a second end (228) on the side opposite to the first end (226) while supporting the planetary gear (212) at an axially intermediate part (227),
wherein the first end (226) of the carrier pin (225) includes a proximal end region (226a) extending from the intermediate part (227) toward the distal end side and a distal end region (226b) extending from the proximal end region (226a) toward the distal end side,
wherein the distal end region (226b) has such a cross-sectional shape that is formed by partially cutting the cross-sectional shape of the proximal end region (226a), and thereby a first stepped surface (226c) facing the distal end side of the first end (226) is formed in the proximal end region (226a), and a second stepped surface (226d) facing in the radial direction with reference to the axis of the carrier pin (225) is formed in the distal end region (226b), and
wherein the other side wall (221) is formed with first and second engagement surfaces (221c, 221d) that are engaged with the first and second stepped surfaces (226c, 226d), respectively.

4. An electric motor driving device (1) according to claim 3,
wherein the other side wall (221) has a large-diameter part (221L) and a small-diameter part (221S) that are coaxial with the power transmission shaft (180),
wherein the bearing hole (221a) is formed in the large-diameter part (221L), and
wherein the small-diameter part (221S) is located more toward the distal end side in the insertion direction of the carrier pin (225) than the large-diameter part (221L) and has such a diameter that the bearing hole (221a) is partially covered, and thereby an end surface of the small-diameter part (221S) that faces the bearing hole (221a) forms the first engagement surface (221c), and an outer peripheral surface of the small-diameter part (221S) forms the second engagement surface (221d).

5. An electric motor driving device (1) according to any one of claims 1 to 4,
wherein the electric motor body (110) includes a rotor (115) having a permanent magnet, a plurality of stators (120) disposed radially outside the rotor (115) and arranged in the circumferential direction, and a plurality of motor coils (125) respectively wound around the plurality of stators (120),
wherein the power transmission shaft (180) includes a rotor supporting region (180b) supporting the rotor (115) in a relatively non-rotatable manner with respect thereto, a proximal end region (180a) extending from the rotor supporting region (180b) toward the side opposite to the planetary gear unit (200), a sun gear supporting region (180c) entering the planetary case (250) from the rotor supporting region (180b) via the output opening (155A) and the input opening (255A) and also supporting the sun gear (211) in a relatively non-rotatable manner with respect thereto, and a distal end region (180d) extending in the direction toward the planetary-side second side wall (260) beyond the sun gear supporting region (180c),
wherein the motor case (150) has the motor-side first side wall (155), a motor-side second side wall (160) arranged on a side opposite to the motor-side first side wall (155) with the electric motor body (110) being sandwiched between the motor-side first and second side walls (155, 160), and a motor-side peripheral wall (165) connecting the peripheral edges of the motor-side first and second side walls (155, 160), and
wherein the power transmission shaft (180) has the proximal end region (180a) supported by the motor-side second side wall (160) via a bearing member (20) and the distal end region (180d) supported by the carrier-side second side wall (222) via a bearing member (25).

6. An electric motor driving device (1) according to any one of claims 1 to 4,
wherein the electric motor body (110) includes a rotor (115) having a permanent magnet, a plurality of stators (120) disposed radially outside the rotor (115) and arranged in the circumferential direction, and a plurality of motor coils (125) respectively wound around the plurality of stators (120),
wherein the power transmission shaft (180) includes a motor output shaft (185) supporting the rotor (115) in a relatively non-rotatable manner with respect thereto and a planetary input shaft (190) supporting the sun gear (211) in a relatively non-rotatable manner with respect thereto,
wherein the motor case (150) has the motor-side first side wall (155), a motor-side second side wall (160) arranged on a side opposite to the motor-side first side wall (155) with the electric motor body (110) being sandwiched between the motor-side first and second side walls (155, 160), and a motor-side peripheral wall (165) connecting the peripheral edges of the motor-side first and second side walls (155, 160),
wherein the motor output shaft (185) has a rotor supporting region (185a) supporting the rotor (115) in a relatively non-rotatable manner with respect thereto, a proximal end region extending from the rotor supporting region (185a) toward the side opposite to the planetary gear unit (200) and supported by the motor-side second side wall (160) via a bearing member (20) in a rotatable manner rotation around the axis, and a motor-output-side connecting region (185b) extending from the rotor supporting region (185a) in the direction toward the planetary gear unit (200),
wherein the planetary input shaft (190) has a sun gear supporting region (190a) supporting the sun gear (211) in a relatively non-rotatable manner with respect thereto, a planetary-input-shaft-side connecting region (190b) extending from the sun gear supporting region (190a) in the direction toward the electric motor unit (100) and supported by the planetary-side first side wall (255) via a bearing member (30) in a rotatable manner around the axis, and a distal end region (190c) extending from the sun gear supporting region (190a) in the direction toward the planetary-side second side wall (260) and supported by the carrier-side second side wall (222) via a bearing member (25) in a rotatable manner around the axis, and
wherein the planetary-input-shaft-side connecting region (190b) and the motor-output-side connecting region (185b) are connected to each other in a relatively non-rotatable manner around the axis and in a removable manner.

7. An electric motor driving device (1) according to any one of claims 1 to 6, wherein the planetary output shaft (280) is integrally formed with the carrier-side second side wall (222).

8. An electric motor driving device (1) according to any one of claims 1 to 6, wherein the planetary output shaft (280) is separate from the carrier-side second side wall (222), and is connected to the carrier-side second side wall (222) in a relatively non-rotatable manner around the axis and in a removable manner with respect thereto.

9. An electric motor driving device (1) according to any one of claims 1 to 6,
wherein the planetary output shaft (280) is separate from the carrier-side second side wall (222),
wherein the planetary output shaft (280) includes a proximal end having a circular cross-section, and the carrier-side second side wall (222) includes a connecting hole (222A) into which the proximal end of the planetary output shaft (280) is inserted and that has a circular cross-section,
wherein the proximal end of the planetary output shaft (280) is fitted into the connecting hole (222A) of the carrier-side second side wall (222) in such a manner that the planetary output shaft (280) is relatively non-rotatable around the axis with respect to the carrier member (220) when rotational load on the planetary output shaft (280) is equal to or less than a predetermined value and the planetary output shaft (280) is relatively rotatable around the axis with respect to the carrier member (220) when rotational load on the planetary output shaft (280) exceeds the predetermined value.

10. An electric motor driving device (1) according to any one of claims 1 to 9,
wherein the planetary gear unit (200) has first and second planetary covers (201, 202) that are mutually separate components,
wherein the first and second planetary covers (201, 202) are formed with planetary-cover-side fastening holes (206) that are arranged in the circumferential direction,
wherein the internal gear (215) is formed with internal-gear-side fastening holes (216) that correspond to the planetary-cover-side fastening holes (206), and
wherein the first planetary cover (201), the second planetary cover (202) and the internal gear (215) are integrally connected using the planetary-cover-side fastening holes (206) and the internal-gear-side fastening hole (216), with the internal gear (215) being sandwiched between the first and second planetary covers (201, 202) so that the first and second planetary covers (201, 202) form the planetary-side first and second side walls (255, 260), respectively, and the internal gear (215) forms the planetary-side peripheral wall (265).

11. An electric motor driving device (1) according to claim 10,
wherein the first planetary cover (201) is formed at a peripheral edge region with planetary-case-side mounting holes (207), each of which is arranged between the adjacent planetary-cover-side fastening holes (206) in the circumferential direction,
wherein the motor-side first side wall (155) is formed with motor-case-side mounting holes (151) corresponding to the planetary-case-side mounting holes (207),
wherein the first planetary cover (201) is connected to the motor-side first side wall (155) by mounting fasteners (50) using the planetary-case-side mounting holes (207) and the motor-case-side mounting holes (151), and
wherein the internal gear (215) is configured so that the outer circumferential surface of the regions corresponding to the planetary-case-side mounting holes (207) and the motor-case-side mounting holes (151) with respect to the circumferential direction are depressed radially inward compared with the outer circumferential surface of the regions where the internal-gear-side fastening holes (216) are formed.

12. An electric motor driving device (1) according to any one of claims 1 to 9,
wherein the planetary gear unit (200) has first and second planetary covers (201, 202) that are mutually separate components,
wherein one of the first and second planetary covers (201, 202) integrally has the internal gear (215), and
wherein the first and second planetary covers (201, 202) are integrally connected to each other using planetary-cover-side fastening holes (206) arranged in the circumferential direction.

## Patentansprüche

1. Elektromotorantriebsvorrichtung (1), umfassend: eine Elektromotoreinheit (100), die einen Elektromotorkörper (110) und ein Motorgehäuse (150), das den Elektromotorkörper (110) aufnimmt, umfasst; und eine Planetengetriebeeinheit (200), umfassend: einen Planetengetriebemechanismus (210), der eine Drehantriebskraft des Elektromotorkörpers verlangsamt, eine Planetenabtriebswelle (280), welche die durch den Planetengetriebemechanismus (210) verlangsamte Drehkraft abgibt, und ein Planetengetriebe (250), das den Planetengetriebemechanismus (210) aufnimmt und mit dem Motorgehäuse (150) verbunden ist, wobei der Planetengetriebemechanismus (210) Folgendes aufweist: ein Sonnenrad (211), Drehkraft von dem Elektromotorkörper (110) über eine Kraftübertragungswelle (180) eingibt, ein Planetenrad (212), das mit dem Sonnenrad (211) verzahnt ist, einen Trägerbolzen (225), der das Planetenrad (212) in einer relativ drehbaren Weise mit Bezug auf diesen stützt, und sich zusammen mit dem Planetenrad (212) um das Sonnenrad (211) dreht, ein inneres Zahnrad (215), dessen Innenumfangsrand mit dem Planetenrad (212) verzahnt ist und das als ein ortsfestes Element dient, und ein Trägerelement (220), das den Trägerbolzen (225) stützt und mit dem die Planetenabtriebswelle (280) verbunden ist, wobei die Elektromotorantriebsvorrichtung (1) **dadurch gekennzeichnet ist, dass**:
eine motorseitige erste Seitenwand (155) des Motorgehäuses (150), die mit dem Planetengetriebe (250) in Kontakt gebracht wird, mit einer Ausgangsöffnung (155A) versehen ist, in welche die Kraftübertragungswelle (180) eingeführt wird,
das Trägerelement (220) eine trägerseitige erste Seitenwand (221) umfasst, die sich auf einer Seite befindet, die näher an der Elektromotoreinheit (100) liegt als das Planetenrad (212), die mit einer mittigen Öffnung (221A) versehen ist, in welche die Kraftübertragungswelle (180) eingeführt wird, und die den Trägerbolzen (225) stützt, eine trägerseitige zweite Seitenwand (222), die sich auf einer Seite befindet, die weiter von der Elektromotoreinheit (100) entfernt ist als das Planetenrad (212), und die den Trägerbolzen (225) stützt, und Verbindungsstücke (223), welche die trägerseitigen ersten und zweiten Seitenwände (221, 222) verbinden, während das Planetenrad (212) teilweise weiter radial nach außen vorstehen kann als die trägerseitigen ersten und zweiten Seitenwände (221, 222),
das Planetengetriebe (250) Folgendes aufweist: eine planetenseitige erste Seitenwand (255) nahe dem Motorgehäuse (150) mit Bezug auf die axiale Richtung, eine planetenseitige zweite Seitenwand (260), die sich auf der Seite gegenüber dem Motorgehäuse (150) mit Bezug auf die axiale Richtung befindet, und eine planetenseitige Umfangswand (265), welche die äußeren Umfangsränder der planetenseitigen ersten und zweiten Seitenwände (255, 260) verbindet,
die planetenseitige erste Seitenwand (255), in der Mitte in der radialen Richtung, mit einer Eingangsöffnung (255A) versehen ist, in welche die Kraftübertragungswelle (180) eingeführt wird, und Folgendes aufweist: eine innere Region (256), die sich radial auswärts von einem Außenumfangsrand der Eingangsöffnung (255A) erstreckt, eine sich axial erstreckende Region (257), die sich in Richtung der trägerseitigen ersten Seitenwand (221) von einem inneren Ende in der radialen Richtung der inneren Region (256) erstreckt, und eine äußere Region (259), die sich radial auswärts von der inneren Region (256) über eine Übergangsregion (258) erstreckt,
die trägerseitige erste Seitenwand (221) drehbar über ein Lagerelement (10) gestützt wird, das zwischen einer Innenumfangsfläche der mittigen Öffnung (221A) und einer Außenumfangsfläche der sich axial erstreckenden Region (257) eingesetzt ist, und
die innere Region (256) in einer Richtung zu dem Elektromotorkörper (110) im Vergleich zu der äußeren Region (259) in einer axialen Richtung der Kraftübertragungswelle (180) so hervorsteht, dass mindestens ein Teil der inneren Region (256) über die Ausgangsöffnung (155A) der motorseitigen ersten Seitenwand (155) in das Motorgehäuse (150) eintritt, wenn das Motorgehäuse (150) und das Planetengetriebe (250) verbunden sind.

2. Elektromotorantriebsvorrichtung (1) nach Anspruch 1, wobei die planetenseitige zweite Seitenwand (260) mit einer Ausgangsöffnung (260A) versehen ist, die es erlaubt, dass sich die Planetenabtriebswelle (280) auswärts erstrecken kann, und diese über ein Lagerelement (15) in einer um die Achse drehbaren Weise stützt.

3. Elektromotorantriebsvorrichtung (1) nach Anspruch 1 oder 2,
wobei ein erstes Ende (226) des Trägerbolzens (225), in dieser Reihenfolge, eingesetzt wird in: ein Lagerloch (222a), das in einer der trägerseitigen ersten und zweiten Seitenwände (221, 222) ausgebildet ist, ein Lagerloch (212a), das in dem Planetenrad (212) ausgebildet ist, und ein Lagerloch (221a), das in der anderen der trägerseitigen ersten und zweiten Seitenwände (221, 222) ausgebildet ist, wodurch der Trägerbolzen (225) durch die andere Seitenwand (221) am ersten Ende (226) gestützt wird und durch die eine Seitenwand (222) an einem zweiten Ende (228) auf der Seite gegenüber dem ersten Ende (226) gestützt wird, während er das Planetenrad (212) an einem axial dazwischenliegenden Teil (227) stützt,
wobei das erste Ende (226) des Trägerbolzens (225) eine proximale Endregion (226a) umfasst, die sich von dem dazwischenliegenden Teil (227) in Richtung der distalen Endseite erstreckt, und eine distale Endregion (226b) umfasst, die sich von der proximalen Endregion (226a) in Richtung der distalen Endseite erstreckt,
wobei die distale Endregion (226b) eine Querschnittsform hat, die durch teilweises Schneiden der Querschnittsform der proximalen Endregion (226a) gebildet wird, wodurch eine erste gestufte Fläche (226c), die der distalen Endseite des ersten Endes (226) zugewandt ist, in der proximalen Endregion (226a) gebildet wird, und eine zweite gestufte Fläche (2264), die in die radiale Richtung mit Bezug auf die Achse des Trägerbolzens (225) weist, in der distalen Endregion (226b) gebildet wird, und
wobei die andere Seitenwand (221) mit ersten und zweiten Eingriffnahmeflächen (221c, 221d) versehen ist, die mit den ersten bzw. zweiten gestuften Flächen (226c, 226d) im Eingriff stehen.

4. Elektromotorantriebsvorrichtung (1) nach Anspruch 3,
wobei die andere Seitenwand (221) einen Teil mit großem Durchmesser (221L) und einen Teil mit kleinem Durchmesser (221S) hat, die koaxial mit der Kraftübertragungswelle (180) verlaufen,
wobei das Lagerloch (221a) in dem Teil mit großem Durchmesser (221L) ausgebildet ist, und
wobei sich der Teil mit kleinem Durchmesser (221S) weiter in Richtung der distalen Endseite in der Einschubrichtung des Trägerbolzens (225) befindet als der Teil mit großem Durchmesser (221L) und einen solchen Durchmesser aufweist, dass das Lagerloch (221a) teilweise bedeckt ist, wodurch eine Endfläche des Teils mit kleinem Durchmesser (221S), die dem Lagerloch (221a) zugewandt ist, die erste Eingriffnahmefläche (221S) bildet und eine Außenumfangsfläche des Teils mit kleinem Durchmesser (221S) die zweite Eingriffnahmefläche (221d) bildet.

5. Elektromotorantriebsvorrichtung (1) nach einem der Ansprüche 1 bis 4,
wobei der Elektromotorkörper (110) einen Rotor (115) umfasst, der Folgendes aufweist: einen Dauermagneten, mehrere Statoren (120), die radial außerhalb des Rotors (115) angeordnet sind und in der Umfangsrichtung angeordnet sind, und mehrere Motorwicklungen (125), die jeweils um die mehreren Statoren (120) gewickelt sind,
wobei die Kraftübertragungswelle (180) Folgendes umfasst: eine Rotorstützregion (180b), die den Rotor (115) in einer relativ nicht-drehbaren Weise mit Bezug auf diese stützt, eine proximale Endregion (180a), die sich von der Rotorstützregion (180b) in Richtung der Seite gegenüber der Planetengetriebeeinheit (200) erstreckt, eine Sonnenradstützregion (180c), die von der Rotorstützregion (180b) her über die Ausgangsöffnung (155A) und die Eingangsöffnung (255A) in das Planetengetriebe (250) eintritt und au-ßerdem das Sonnenrad (211) in einer relativ nicht-drehbaren Weise mit Bezug auf dieses stützt, und eine distale Endregion (180d), die sich in Richtung der planetenseitigen zweiten Seitenwand (260) über die Sonnenradstützregion (180c) hinaus erstreckt,
wobei das Motorgehäuse (150) Folgendes aufweist: die motorseitige erste Seitenwand (155), eine motorseitige zweite Seitenwand (160), die auf einer Seite gegenüber der motorseitigen ersten Seitenwand (155) angeordnet ist, wobei der Elektromotorkörper (110) zwischen den motorseitigen ersten und zweiten Seitenwänden (155, 160) angeordnet ist, und eine motorseitige Umfangswand (165), welche die Umfangsränder der motorseitigen ersten und zweiten Seitenwänden (155, 160) verbindet, und
wobei die proximale Endregion (180a) der Kraftübertragungswelle (180) durch die motorseitige zweite Seitenwand (160) über ein Lagerelement (20) gestützt wird, und die distale Endregion (180d) der Kraftübertragungswelle (180) durch die trägerseitige zweite Seitenwand (222) über ein Lagerelement (25) gestützt wird.

6. Elektromotorantriebsvorrichtung (1) nach einem der Ansprüche 1 bis 4,
wobei der Elektromotorkörper (110) einen Rotor (115) umfasst, der Folgendes aufweist: einen Dauermagneten, mehrere Statoren (120), die radial außerhalb des Rotors (115) angeordnet sind und in der Umfangsrichtung angeordnet sind, und mehrere Motorwicklungen (125), die jeweils um die mehreren Statoren (120) gewickelt sind,
wobei die Kraftübertragungswelle (180) eine Motorabtriebswelle (185) umfasst, die den Rotor (115) in einer relativ nicht-drehbaren Weise mit Bezug auf diesen stützt, und eine Planetenantriebswelle (190) umfasst, die das Sonnenrad (211) in einer relativ nicht-drehbaren Weise mit Bezug auf dieses stützt,
wobei das Motorgehäuse (150) Folgendes aufweist: die motorseitige erste Seitenwand (155), eine motorseitige zweite Seitenwand (160), die auf einer Seite gegenüber der motorseitigen ersten Seitenwand (155) angeordnet ist, wobei der Elektromotorkörper (110) zwischen den motorseitigen ersten und zweiten Seitenwänden (155, 160) angeordnet ist, und eine motorseitige Umfangswand (165), welche die Umfangsränder der motorseitigen ersten und zweiten Seitenwände (155, 160) verbindet,
wobei die Motorabtriebswelle (185) Folgendes aufweist: eine Rotorstützregion (185a), die den Rotor (115) in einer relativ nicht-drehbaren Weise mit Bezug auf diesen stützt, eine proximale Endregion, die sich von der Rotorstützregion (185a) in Richtung der Seite gegenüber der Planetengetriebeeinheit (200) erstreckt und durch die motorseitige zweite Seitenwand (160) über ein Lagerelement (20) in einer um die Achse drehbaren Weise gestützt wird, und eine motorabtriebsseitige Verbindungsregion (185b), die sich von der Rotorstützregion (185a) in Richtung der Planetengetriebeeinheit (200) erstreckt,
wobei die Planetenantriebswelle (190) Folgendes aufweist: eine Sonnenradstützregion (190a), die das Sonnenrad (211) in einer relativ nicht-drehbaren Weise mit Bezug auf dieses stützt, eine planetenantriebswellenseitige Verbindungsregion (190b), die sich von der Sonnenradstützregion (190a) in Richtung der Elektromotoreinheit (100) erstreckt und durch die planetenseitige erste Seitenwand (255) über ein Lagerelement (30) in einer um die Achse drehbaren Weise gestützt wird, und eine distale Endregion (190c), die sich von der Sonnenradstützregion (190a) in Richtung der planetenseitigen zweiten Seitenwand (260) erstreckt und durch die trägerseitige zweite Seitenwand (222) über ein Lagerelement (25) in einer um die Achse drehbaren Weise gestützt wird, und
wobei die planetenantriebswellenseitige Verbindungsregion (190b) und die motorabtriebsseitige Verbindungsregion (185b) in einer um die Achse relativ nicht-drehbaren Weise und in einer abnehmbaren Weise miteinander verbunden sind.

7. Elektromotorantriebsvorrichtung (1) nach einem der Ansprüche 1 bis 6, wobei die Planetenabtriebswelle (280) integral mit der trägerseitigen zweiten Seitenwand (222) ausgebildet ist.

8. Elektromotorantriebsvorrichtung (1) nach einem der Ansprüche 1 bis 6, wobei die Planetenabtriebswelle (280) von der trägerseitigen zweiten Seitenwand (222) getrennt ist und mit der trägerseitigen zweiten Seitenwand (222) in einer um die Achse relativ nicht-drehbaren Weise und in einer abnehmbaren Weise mit Bezug auf diese verbunden ist.

9. Elektromotorantriebsvorrichtung (1) nach einem der Ansprüche 1 bis 6,
wobei die Planetenabtriebswelle (280) von der trägerseitigen zweiten Seitenwand (222) getrennt ist,
wobei die Planetenabtriebswelle (280) ein proximales Ende umfasst, das einen kreisförmigen Querschnitt aufweist, und die trägerseitige zweite Seitenwand (222) ein Verbindungsloch (222A) umfasst, in welches das proximale Ende der Planetenabtriebswelle (280) eingesetzt wird und das einen kreisförmigen Querschnitt aufweist,
wobei das proximale Ende der Planetenabtriebswelle (280) in das Verbindungsloch (222A) der trägerseitigen zweiten Seitenwand (222) in einer solchen Weise eingeführt wird, dass die Planetenabtriebswelle (280) mit Bezug auf das Trägerelement (220) um die Achse relativ nicht-drehbar ist, wenn eine Drehlast auf die Planetenabtriebswelle (280) maximal so groß ist wie ein zuvor bestimmter Wert, und die Planetenabtriebswelle (280) mit Bezug auf das Trägerelement (220) um die Achse relativ drehbar ist, wenn eine Drehlast auf die Planetenabtriebswelle (280) den zuvor bestimmten Wert übersteigt.

10. Elektromotorantriebsvorrichtung (1) nach einem der Ansprüche 1 bis 9,
wobei die Planetengetriebeeinheit (200) erste und zweite Planetenabdeckungen (201, 202) aufweist, die voneinander getrennte Komponenten sind,
wobei die ersten und zweiten Planetenabdeckungen (201, 202) mit planetenabdeckungsseitigen Befestigungslöchern (206) versehen sind, die in der Umfangsrichtung angeordnet sind,
wobei das innere Zahnrad (215) mit innerzahnradseitigen Befestigungslöchern (216) versehen ist, die den planetenabdeckungsseitigen Befestigungslöchern (206) entsprechen, und
wobei die erste Planetenabdeckung (201), die zweite Planetenabdeckung (202) und das innere Zahnrad (215) integral unter Verwendung der planetenabdeckungsseitigen Befestigungslöcher (206) und des innerzahnradseitigen Befestigungslochs (216) verbunden sind, wobei das innere Zahnrad (215) zwischen den ersten und zweiten Planetenabdeckungen (201, 202) so angeordnet ist, dass die ersten und zweiten Planetenabdeckungen (201, 202) die planetenseitigen ersten bzw. zweiten Seitenwände (255, 260) bilden, und das innere Zahnrad (215) die planetenseitige Umfangswand (265) bildet.

11. Elektromotorantriebsvorrichtung (1) nach Anspruch 10,
wobei die erste Planetenabdeckung (201) an einer Umfangsrandregion mit planetengehäuseseitigen Montagelöchern (207) ausgebildet ist, von denen jedes zwischen den benachbarten planetenabdeckungsseitigen Befestigungslöchern (206) in der Umfangsrichtung angeordnet ist,
wobei die motorseitige erste Seitenwand (155) mit motorgehäuseseitigen Montagelöchern (151) versehen ist, die den planetengehäuseseitigen Montagelöchern (207) entsprechen, wobei die erste Planetenabdeckung (201) mit der motorseitigen ersten Seitenwand (155) durch Montagebefestigungsmittel (50) unter Verwendung der planetengehäuseseitigen Montagelöcher (207) und der motorgehäuseseitigen Montagelöcher (151) verbunden ist, und
wobei das innere Zahnrad (215) so ausgebildet ist, dass die Außenumfangsfläche der Regionen, die den planetengehäuseseitigen Montagelöchern (207) und den motorgehäuseseitigen Montagelöchern (151) mit Bezug auf die Umfangsrichtung entsprechen, im Vergleich zur Außenumfangsfläche der Regionen, wo die innerzahnradseitigen Befestigungslöcher (216) ausgebildet sind, radial einwärts vertieft sind.

12. Elektromotorantriebsvorrichtung (1) nach einem der Ansprüche 1 bis 9,
wobei die Planetengetriebeeinheit (200) erste und zweite Planetenabdeckungen (201, 202) aufweist, die voneinander getrennte Komponenten sind,
wobei in eine der ersten und zweiten Planetenabdeckungen (201, 202) das innere Zahnrad (215) integriert ist, und wobei die ersten und zweiten Planetenabdeckungen (201, 202) unter Verwendung planetenabdeckungsseitiger Befestigungslöcher (206), die in der Umfangsrichtung angeordnet sind, integral miteinander verbunden sind.

## Revendications

1. Dispositif d'entraînement de moteur électrique (1) comprenant une unité de moteur électrique (100) qui comprend un corps de moteur électrique (110) et un carter de moteur (150) recevant le corps de moteur électrique (110), et une unité d'engrenage planétaire (200) qui comprend un mécanisme d'engrenage planétaire (210) décélérant la puissance rotative entrée à partir du corps de moteur électrique, un arbre de sortie de planétaire (280) délivrant la puissance rotative décélérée par le mécanisme d'engrenage planétaire (210) et un carter de planétaire (250) recevant le mécanisme d'engrenage planétaire (210) et relié au carter de moteur (150), dans lequel le mécanisme d'engrenage planétaire (210) comporte un engrenage solaire (211) qui entre une puissance rotative à partir du corps de moteur électrique (110) par l'intermédiaire d'un arbre de transmission de puissance, un engrenage planétaire (212) qui engrène avec l'engrenage solaire (211), une tige de support (225) qui supporte l'engrenage planétaire (212) de façon relativement rotative par rapport à celle-ci et qui orbite autour de l'engrenage solaire (211) conjointement avec l'engrenage planétaire (212), un engrenage intérieur (215) dont le bord circonférentiel intérieur engrène avec l'engrenage planétaire (212) et qui fonctionne en tant qu'élément fixe, et un élément de support (220) qui supporte la tige de support (225) et auquel l'arbre de sortie de planétaire (280) est relié, le dispositif d'entraînement de moteur électrique (1) étant **caractérisé en ce que**, une première paroi latérale côté moteur (155) du carter moteur (150) qui est mise en contact avec le carter de planétaire (250) est munie d'une ouverture de sortie (155A) dans laquelle est inséré l'arbre de transmission de puissance (180),
l'élément de support (220) comprend une première paroi latérale côté support (221) qui est située sur un côté plus proche de l'unité de moteur électrique (100) que l'engrenage planétaire (212), qui est munie d'une ouverture centrale (221A) dans laquelle est inséré l'arbre de transmission de puissance (180), et qui supporte la tige de support (225), une seconde paroi latérale côté support (222) qui est située sur un côté plus éloigné de l'unité de moteur électrique (100) que l'engrenage planétaire (212) et qui supporte la tige de support (225), et des pièces de liaison (223) reliant les première et seconde parois latérales côté support (221, 222), tout en permettant à l'engrenage planétaire (212) de s'étendre partiellement plus radialement vers l'extérieur que les première et seconde parois latérales côté support (221, 222),
le carter de planétaire (250) possède une première paroi latérale côté planétaire (255) proche du carter de moteur (150) par rapport à la direction axiale, une seconde paroi latérale côté planétaire (260) située du côté opposé au carter de moteur (150) par rapport à la direction axiale, et une paroi périphérique côté planétaire (265) reliant les bords périphériques extérieurs des première et seconde parois latérales (255, 260) côté planétaire,
la première paroi latérale côté planétaire (255) est munie, au centre dans la direction radiale, d'une ouverture d'entrée (255A) dans laquelle est inséré l'arbre de transmission de puissance (180), et possède une région intérieure (256) s'étendant radialement vers l'extérieur à partir d'un bord périphérique extérieur de l'ouverture d'entrée (255A), une région s'étendant axialement (257) s'étendant dans la direction vers la première paroi latérale côté support (221) à partir d'une extrémité intérieure dans la direction radiale de la région intérieure (256), et une région extérieure (259) s'étendant radialement vers l'extérieur à partir de la région intérieure (256) par l'intermédiaire d'une région de transition (258),
la première paroi latérale côté support (221) est supportée en rotation par l'intermédiaire d'un élément de palier (10) inséré entre une surface périphérique intérieure de l'ouverture centrale (221A) et une surface périphérique extérieure de la région s'étendant axialement (257), et
la région intérieure (256) fait saillie dans une direction vers le corps de moteur électrique (110) en comparaison avec la région extérieure (259) dans une direction axiale de l'arbre de transmission de puissance (180), de sorte qu'au moins une partie de la région intérieure (256) pénètre dans le carter de moteur (150) par l'intermédiaire de l'ouverture de sortie (155A) de la première paroi latérale côté moteur (155) lorsque le carter de moteur (150) et le carter de planétaire (250) sont reliés.

2. Dispositif d'entraînement de moteur électrique (1) selon la revendication 1, dans lequel la seconde paroi latérale côté planétaire (260) est munie d'une ouverture de sortie (260A) qui permet à l'arbre de sortie de planétaire (280) de s'étendre vers l'extérieur, et supporte ce dernier d'une manière rotative autour de l'axe par l'intermédiaire d'un élément de palier (15).

3. Dispositif d'entraînement de moteur électrique (1) selon la revendication 1 ou 2,
dans lequel une première extrémité (226) de la tige de support (225) est insérée dans un trou de palier (222a) formé dans l'une des première et seconde parois latérales côté support (221, 222), un trou de palier (212a) formé dans l'engrenage planétaire (212), et un trou de palier (221a) formé dans l'autre des première et seconde parois latérales côté support (221, 222) dans cet ordre, et ainsi la tige de support (225) est supportée par l'autre paroi latérale (221) au niveau de la première extrémité (226) et supportée par ladite une paroi latérale (222) au niveau d'une seconde extrémité (228) sur le côté opposé à la première extrémité (226) tout en supportant l'engrenage planétaire (212) au niveau d'une partie axialement intermédiaire (227),
dans lequel la première extrémité (226) de la tige de support (225) comprend une région d'extrémité proximale (226a) s'étendant à partir de la partie intermédiaire (227) vers le côté d'extrémité distale, et une région d'extrémité distale (226b) s'étendant à partir de la région d'extrémité proximale (226a) vers le côté d'extrémité distale,
dans lequel la région d'extrémité distale (226b) présente une forme en coupe transversale qui est formée en découpant partiellement la forme de la section transversale de la région d'extrémité proximale (226a), et ainsi une première surface étagée (226c) faisant face au côté d'extrémité distale de la première extrémité (226) est formée dans la région d'extrémité proximale (226a), et une seconde surface étagée (2264) tournée vers la direction radiale par rapport à l'axe de la tige de support (225) est formée dans la région d'extrémité distale (226b), et dans lequel l'autre paroi latérale (221) est munie de première et seconde surfaces de mise en prise (221c, 221d) qui sont en prise respectivement avec les première et seconde surfaces étagées (226c, 226d).

4. Dispositif d'entraînement de moteur électrique (1) selon la revendication 3,
dans lequel l'autre paroi latérale (221) a une partie de grand diamètre (221L) et une partie de petit diamètre (221S) qui sont coaxiales avec l'arbre de transmission de puissance (180),
dans lequel le trou de support (221a) est formé dans la partie de grand diamètre (221L), et
dans lequel la partie de petit diamètre (2215) est située plus vers le côté d'extrémité distale dans la direction d'insertion de la tige de support (225) que la partie de grand diamètre (221L), et a un diamètre tel que le trou de palier (221a) est partiellement recouvert, et ainsi une surface d'extrémité de la partie de petit diamètre (221S) qui fait face au trou de palier (221a) forme la première surface de mise en prise (221c), et une surface périphérique extérieure de la partie de petit diamètre (221S) forme la seconde surface de mise en prise (221d).

5. Dispositif d'entraînement de moteur électrique (1) selon l'une quelconque des revendications 1 à 4,
dans lequel le corps de moteur électrique (110) comprend un rotor (115) ayant un aimant permanent, une pluralité de stators (120) disposés radialement à l'extérieur du rotor (115) et agencés dans la direction circonférentielle, et une pluralité de bobines de moteur (125) enroulées respectivement autour de la pluralité de stators (120),
dans lequel l'arbre de transmission de puissance (180) comprend une région de support de rotor (180b) supportant le rotor (115) d'une manière relativement non rotative par rapport à celui-ci, une région d'extrémité proximale (180a) s'étendant à partir de la région de support de rotor (180b) vers le côté opposé à l'unité d'engrenage planétaire (200), une région de support d'engrenage solaire (180c) pénétrant dans le carter de planétaire (250) à partir de la région de support de rotor (180b) par l'intermédiaire de l'ouverture de sortie (155A) et de l'ouverture d'entrée (255A), et supportant également l'engrenage solaire (211) d'une manière relativement non rotative par rapport à celui-ci, et une région d'extrémité distale (180d) s'étendant dans la direction vers la seconde paroi latérale côté planétaire (260) au-delà de la région de support d'engrenage solaire (180c),
dans lequel le carter de moteur (150) possède la première paroi latérale côté moteur (155), une seconde paroi latérale côté moteur (160) agencée sur un côté opposé à la première paroi latérale côté moteur (155) avec le corps de moteur électrique (110) qui est pris en sandwich entre les première et seconde parois latérales côté moteur (155, 160), et une paroi périphérique côté moteur (165) reliant les bords périphériques des première et seconde parois latérales côté moteur (155, 160), et
dans lequel l'arbre de transmission de puissance (180) a la région d'extrémité proximale (180a) supportée par la seconde paroi latérale côté moteur (160) par l'intermédiaire d'un élément de palier (20) et la région d'extrémité distale (180d) supportée par la seconde paroi latérale côté support (222) par l'intermédiaire d'un élément de palier (25).

6. Dispositif d'entraînement de moteur électrique (1) selon l'une quelconque des revendications 1 à 4,
dans lequel le corps de moteur électrique (110) comprend un rotor (115) ayant un aimant permanent, une pluralité de stators (120) disposés radialement à l'extérieur du rotor (115) et agencés dans la direction circonférentielle, et une pluralité de bobines de moteur (125) enroulées respectivement autour de la pluralité de stators (120),
dans lequel l'arbre de transmission de puissance (180) comprend un arbre de sortie de moteur (185) supportant le rotor (115) d'une manière relativement non rotative par rapport à celui-ci, et un arbre d'entrée de planétaire (190) supportant l'engrenage solaire (211) d'une manière relativement non rotative par rapport à celui-ci,
dans lequel le carter de moteur (150) possède la première paroi latérale côté moteur (155), une seconde paroi latérale côté moteur (160) agencée sur un côté opposé à la première paroi latérale côté moteur (155) avec le corps de moteur électrique (110) qui est pris en sandwich entre les première et seconde parois latérales côté moteur (155, 160), et une paroi périphérique côté moteur (165) reliant les bords périphériques des première et seconde parois latérales côté moteur (155, 160),
dans lequel l'arbre de sortie de moteur (185) possède une région de support de rotor (185a) supportant le rotor (115) d'une manière relativement non rotative par rapport à celui-ci, une région d'extrémité proximale s'étendant à partir de la région de support de rotor (185a) vers le côté opposé à l'unité d'engrenage planétaire (200) et supportée par la seconde paroi latérale côté moteur (160) par l'intermédiaire d'un élément de palier (20) d'une manière rotative autour de l'axe, et une région de liaison côté sortie de moteur (185b) s'étendant à partir de la région de support de rotor (185a) en direction de l'unité d'engrenage planétaire (200),
dans lequel l'arbre d'entrée de planétaire (190) possède une région de support d'engrenage solaire (190a) supportant l'engrenage solaire (211) d'une manière relativement non rotative par rapport à celui-ci, une région de liaison côté arbre d'entrée de planétaire (190b) s'étendant à partir de la région de support d'engrenage solaire (190a) dans la direction de l'unité de moteur électrique (100) et supportée par la première paroi latérale côté planétaire (255) par l'intermédiaire d'un élément de palier (30) d'une manière rotative autour de l'axe, et une région d'extrémité distale (190c) s'étendant à partir de la région de support d'engrenage solaire (190a) dans la direction vers la seconde paroi latérale côté planétaire (260) et supportée par la seconde paroi latérale côté support (222) par l'intermédiaire d'un élément de palier (25) d'une manière rotative autour de l'axe, et
dans lequel la région de liaison côté arbre d'entrée de planétaire (190b) et la région de liaison côté sortie de moteur (185b) sont reliées l'une à l'autre d'une manière relativement non rotative autour de l'axe et de manière amovible.

7. Dispositif d'entraînement de moteur électrique (1) selon l'une quelconque des revendications 1 à 6, dans lequel l'arbre de sortie de planétaire (280) est formé d'une seule pièce avec la seconde paroi latérale côté support (222).

8. Dispositif d'entraînement de moteur électrique (1) selon l'une quelconque des revendications 1 à 6, dans lequel l'arbre de sortie de planétaire (280) est séparé de la seconde paroi latérale côté support (222) et est relié à la seconde paroi latérale côté support (222) d'une manière relativement non rotative autour de l'axe et de manière amovible par rapport à celui-ci.

9. Dispositif d'entraînement de moteur électrique (1) selon l'une quelconque des revendications 1 à 6,
dans lequel l'arbre de sortie de planétaire (280) est séparé de la seconde paroi latérale côté support (222), dans lequel l'arbre de sortie de planétaire (280) comprend une extrémité proximale ayant une section transversale circulaire, et la seconde paroi latérale côté support (222) comprend un trou de liaison (222A) dans lequel est insérée l'extrémité proximale de l'arbre de sortie de planétaire (280) et qui présente une section transversale circulaire,
dans lequel l'extrémité proximale de l'arbre de sortie de planétaire (280) est montée dans le trou de liaison (222A) de la seconde paroi latérale côté support (222) de telle sorte que l'arbre de sortie de planétaire (280) est relativement non rotatif autour de l'axe par rapport à l'élément de support (220) lorsque la charge de rotation sur l'arbre de sortie de planétaire (280) est égale ou inférieure à une valeur prédéterminée, et l'arbre de sortie de planétaire (280) est relativement rotatif autour de l'axe par rapport à l'élément de support (220) lorsque la charge de rotation sur l'arbre de sortie de planétaire (280) dépasse la valeur prédéterminée.

10. Dispositif d'entraînement de moteur électrique (1) selon l'une quelconque des revendications 1 à 9,
dans lequel l'unité d'engrenage planétaire (200) possède de premier et second couvercles de planétaire (201, 202) qui sont des composants mutuellement séparés,
dans lequel les premier et second couvercles de planétaire (201, 202) sont munis de trous de fixation côté couvercles de planétaire (206) qui sont agencés dans la direction circonférentielle,
dans lequel l'engrenage intérieur (215) est muni de trous de fixation côté engrenage intérieur (216) qui correspondent aux trous de fixation côté couvercles de planétaire (206), et
dans lequel le premier couvercle de planétaire (201), le second couvercle de planétaire (202) et l'engrenage intérieur (215) sont reliés d'un seul tenant à l'aide des trous de fixation côté couvercles de planétaire (206) et des trous de fixation côté engrenage interne intérieur (216), avec l'engrenage intérieur (215) pris en sandwich entre les premier et second couvercles de planétaire (201, 202), de sorte que les premier et second couvercles de planétaire (201, 202) forment respectivement les première et seconde parois latérales côté planétaire (255, 260), et l'engrenage intérieur (215) forme la paroi périphérique côté planétaire (265).

11. Dispositif d'entraînement de moteur électrique (1) selon la revendication 10,
dans lequel le premier couvercle de planétaire (201) est muni, au niveau d'une région de bord périphérique, de trous de montage côté carter de planétaire (207), chacun d'entre eux étant agencé entre les trous de fixation côté couvercles de planétaire (206) adjacents dans la direction circonférentielle,
dans lequel la première paroi latérale côté moteur (155) est munie de trous de montage côté carter de moteur (151) correspondant aux trous de montage côté carter de planétaire (207),
dans lequel le premier couvercle de planétaire (201) est relié à la première paroi latérale côté moteur (155) en montant des fixations (50) en utilisant les trous de montage côté carter de planétaire (207) et les trous de montage côté carter de moteur (151), et
dans lequel l'engrenage intérieur (215) est configuré de telle sorte que la surface circonférentielle extérieure des régions correspondant aux trous de montage côté carter de planétaire (207) et aux trous de montage côté carter de moteur (151) par rapport à la direction circonférentielle est surbaissée radialement vers l'intérieur par rapport à la surface circonférentielle extérieure des régions où sont formés les trous de fixation côté engrenage intérieur (216).

12. Dispositif d'entraînement de moteur électrique (1) selon l'une quelconque des revendications 1 à 9,
dans lequel l'unité d'engrenage planétaire (200) possède de premier et second couvercles de planétaire (201, 202) qui sont des composants mutuellement séparés,
dans lequel l'un des premier et second couvercles de planétaire (201, 202) comprend de manière solidaire l'engrenage interne (215), et
dans lequel les premier et second couvercles de planétaire (201, 202) sont reliés d'un seul bloc l'un à l'autre en utilisant des trous de fixation côté couvercles de planétaire (206) agencés dans la direction circonférentielle.
